# EUROPÄISCHE PATENTSCHRIFT

(11) **EP 3 350 026 B1**
(45) Veröffentlichungstag und Bekanntmachung des Hinweises auf die Patenterteilung: **11.09.2019**
(21) Anmeldenummer: 16751176.5
(22) Anmeldetag: 15.07.2016
(51) Int. Cl.: B60R 19/48, G01S 7/521, G10K 9/22

(54) **ABDECKUNG ZUM BEFESTIGEN EINES AKUSTISCHEN SENSORS AN EINER DURCHGANGSÖFFNUNG EINER FAHRZEUGKOMPONENTE**
FIXING COVER FOR AN ACOUSTIC SENSOR IN AN OPENING OF A VEHICLE COMPONENT
COUVERCLE D'UN SENSEUR ACOUSTIQUE POUR LA FIXATION DUDIT SENSEUR DANS UNE OUVERTURE D'UN COMPOSANT DE VÉHICULE

(30) Priorität: 16.09.2015 DE 102015217738
(43) Veröffentlichungstag der Anmeldung: 25.07.2018
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2016/066870
(87) Internationale Veröffentlichungsnummer: WO 2017/045801

(56) Entgegenhaltungen:
- WO-A1-2012/032584
- WO-A2-2008/087320
- DE-A1- 10 347 098
- JP-A- 2011 057 187
- JP-A- 2013 136 320
- JP-A- 2014 204 387
- US-A1- 2006 284 515
- US-A1- 2008 184 802

## Beschreibung

### Stand der Technik

Die vorliegende Erfindung betrifft eine Abdeckung zum Befestigen eines akustischen Sensors an einer Durchgangsöffnung einer Fahrzeugkomponente.

Bei einer Montage akustischer Sensoren an einer Fahrzeugkomponente kommt es zwischen dem akustischen Sensor und der Fahrzeugkomponente zu einer optisch sichtbaren Trennstelle, da zwischen dem akustischen Sensor und der Fahrzeugkomponente typischerweise ein Entkopplungsring angeordnet ist, welcher nicht lackierbar ist. Diese Trennstelle ist typischerweise ein Spalt von circa 1 mm Breite.

Aktuelle akustische Sensoren, insbesondere Ultraschallsensoren, sind nach einer Montage an einem Fahrzeug anhand einer kreisrunden Unterbrechung der Oberfläche der Fahrzeugkomponenten sichtbar. Insbesondere die Tatsache, dass eine farbliche Abstimmung der Fahrzeugkomponente und eines Ultraschallsensors besonders bei hellen Farben, wie zum Beispiel Weiß, nicht möglich ist, beschränkt derzeit eine Weiterentwicklung im Bereich der akustischen Sensorik.

Das Dokument WO 2012/032584 A1 offenbart eine Abdeckung zum Befestigen eines akustischen Sensors an einer Durchgangsöffnung einer Fahrzeugkomponente, umfassend: einen Deckelbereich, welcher auf einer ersten Seite eine Oberfläche aufweist und welcher einen Membranbereich sowie einen Adaptionsbereich umfasst, wobei die Oberfläche des Deckelbereichs eine Oberfläche des Membranbereichs und eine Oberfläche des Adaptionsbereichs umfasst, wobei der Adaptionsbereich einen Randbereich des Deckelbereichs mit einem äußeren und einem inneren Umfang bildet, und wobei der Membranbereich einen zentralen Bereich der Oberfläche bildet, sowie einen Halterungsbereich, welcher einen federelastischen Klemmbereich umfasst, der dazu eingerichtet ist, die Abdeckung über eine Auflagefläche des Adaptionsbereichs und den Klemmbereich an einer Fahrzeugkomponente zu fixieren.

Technisch ist es erstrebenswert, größere Membranen beziehungsweise unterschiedliche Membranformen, zum Beispiel eckige Membrane, zu verbauen. Da jedoch bislang der Entkopplungsring zwischen dem akustischen Sensor und der Fahrzeugkomponente eine unumgängliche Notwendigkeit ist, ergibt es sich, dass eine Weiterentwicklung akustischer Sensoren beschränkt ist, da auch deren Erscheinungsbild an der Fahrzeugkomponente zu berücksichtigen ist. Dabei ist es erstrebenswert, dass der akustische Sensor nach einer Montage an einer Fahrzeugkomponente praktisch nicht wahrnehmbar ist.

### Offenbarung der Erfindung

Die erfindungsgemäße Abdeckung zum Befestigen eines akustischen Sensors an einer Durchgangsöffnung einer Fahrzeugkomponente umfasst die Merkmale des Anspruchs 1.

Auf diese Weise wird eine Abdeckung geschaffen, welche durch einen von dem Adaptionsbereich unabhängigen Halterungsbereich an einer Fahrzeugkomponente gehalten wird. Die Auflagefläche bildet einen konkreten Anschlag durch den der Adaptionsbereich entlastet wird. Somit kann der Adaptionsbereich besonders vorteilhaft an eine Oberfläche der Fahrzeugkomponente angepasst werden. So kann dieser beispielsweise sehr dünn ausgeführt werden, da nur geringe Kräfte auf diesen wirken, da die Abdeckung durch den Halterungsbereich in Position gehalten wird. Es wird somit ein besonders vorteilhafter Übergang zwischen der Abdeckung und der Fahrzeugkomponente ermöglicht. Der akustische Sensor ist bevorzugt ein Ultraschallsensor.

Die Unteransprüche zeigen bevorzugte Weiterbildungen der Erfindung.

Es ist vorteilhaft, wenn der Adaptionsbereich federelastisch ist. Wird die Abdeckung in eine Durchgangsöffnung einer Fahrzeugkomponente eingebracht, so wird es ermöglicht, dass der Adaptionsbereich durch seine federnden Eigenschaften gegen eine Oberfläche der Fahrzeugkomponente gepresst wird. Somit wird eine Lücke zwischen der Fahrzeugkomponente und der Abdeckung geschlossen. Dies bringt unter Anderem optische Vorteile mit sich. Ferner erfolgt dadurch ein Abdichten der Durchgangsöffnung.

Auch ist es vorteilhaft, wenn der Membranbereich dazu eingerichtet ist, von einem elektroakustischen Wandler zu einer Schwingung angeregt zu werden, um ein Schallsignal auszusenden oder zu empfangen. Dazu sind eine Dicke und ein Material des Membranbereichs insbesondere derart gewählt, dass der Membranbereich in einer Arbeitsfrequenz des akustischen Sensors mit möglichst geringer Dämpfung schwingen kann. Ferner ist der Membranbereich dabei derart gestaltet, dass dieser eine zugängliche Kontaktstelle aufweist, über welche der Membranbereich zum Schwingen angeregt werden kann. Auf diese Weise wird sichergestellt, dass ein akustisches Signal des akustischen Sensors optimal über den Membranbereich in eine Umgebung der Fahrzeugkomponente abgegeben wird.

Ferner ist es vorteilhaft, wenn auf der zweiten Seite des Deckelbereichs eine Sicke den Membranbereich umläuft. Somit wird eine Dämpfung des Membranbereichs bei einer Schwingung reduziert und folglich eine Effektivität eines befestigten Ultraschallsensors auf einem hohen Niveau gehalten. Gleichzeitig bleibt ein optisches Erscheinungsbild der ebenen Oberfläche erhalten. Ferner erfolgt durch die Sicke ein Entkoppeln des Membranbereichs von den übrigen Bereichen der Abdeckung und somit in einem montierten Zustand auch von der Fahrzeugkomponente.

Ferner ist es vorteilhaft, wenn eine Dicke des Adaptionsbereichs an seinem äußeren Umfang geringer wird, wobei die Dicke des Adaptionsbereichs einen Abstand zwischen der ersten Seite und der zweiten Seite des Deckelbereichs ist. Es verjüngt sich somit ein Querschnitt des Adaptionsbereichs. Somit ist der Deckelbereich und somit die Abdeckung in einem Bereich, in dem der Adaptionsbereich bei einer Montage auf der Fahrzeugkomponente aufliegt, besonders dünn. Dadurch kann ein besonders unauffälliger Übergang zwischen der Abdeckung und der Fahrzeugkomponente geschaffen werden.

Auch ist es vorteilhaft, wenn die Abdeckung einen Trägerbereich umfasst, der an dem Halterungsbereich angeordnet ist und dazu eingerichtet ist, den akustischen Sensor zwischen dem Membranbereich und dem Trägerbereich zu fixieren. Somit wird eine Verbindung zwischen der Abdeckung und dem akustischen Sensor auf einfache Weise gewährleistet.

Ebenso vorteilhaft ist es, wenn der Trägerbereich zumindest teilweise federelastisch ist. Insbesondere ist der Trägerbereich derart gestaltet, dass dieser den akustischen Sensor gegen den Membranbereich drückt, wenn der akustische Sensor zwischen dem Membranbereich und dem Trägerbereich fixiert ist. Auf diese Weise wird eine effektive Schwingungsübertragung zwischen dem akustischen Sensor und dem Membranbereich gewährleistet.

Ferner vorteilhaft ist ein Fahrzeugbauteil, welches die Abdeckung sowie die Fahrzeugkomponente umfasst, wobei die Abdeckung in einer Durchgangsöffnung der Fahrzeugkomponente angeordnet ist, wobei die Abdeckung über die Auflagefläche und den Klemmbereich an die Fahrzeugkomponente geklemmt ist. Ein solches Fahrzeugbauteil weist alle Vorteile der erfindungsgemäßen Abdeckung auf.

Bei dem Fahrzeugbauteil ist es vorteilhaft, wenn die ebene Oberfläche des Deckelbereichs in einer gemeinsamen Ebene mit einer Oberfläche der Fahrzeugkomponente liegt. Auf diese Weise werden die Abdeckung und somit der akustische Sensor besonders gut verborgen und bieten zudem kaum Angriffspunkte für mechanische Einflüsse.

Zudem ist es vorteilhaft, wenn eine gemeinsame Lackschicht sowohl die ebene Oberfläche des Deckelbereichs als auch eine angrenzende Oberfläche der Fahrzeugkomponente bedeckt. Auf diese Weise sind die Abdeckung und der zugehörige akustische Sensor gänzlich unsichtbar. Dabei ist durch die erfindungsgemäße Abdeckung gewährleistet, dass die Lackschicht besonders gleichmäßig aufgetragen werden kann und eine hohe Stabilität gegenüber Beschädigungen aufweist, da diese besonders solide durch die Abdeckung abgestützt wird.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Fahrzeugbauteil mit einer Abdeckung zum Befestigen eines akustischen Sensors gemäß einer ersten Ausführungsform der Erfindung, und
- Figur 2: das Fahrzeugbauteil mit der Abdeckung zum Befestigen des akustischen Sensors gemäß der ersten Ausführungsform der Erfindung mit einem an der Abdeckung fixierten akustischen Sensor.

### Ausführungsformen der Erfindung

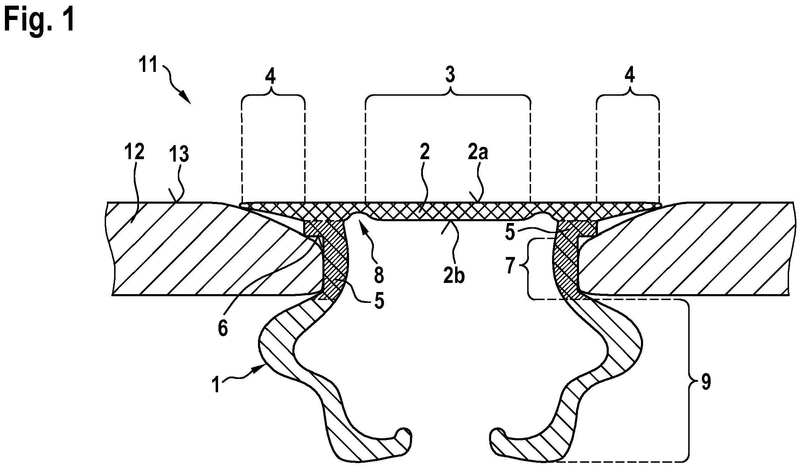

Figur 1 zeigt ein Fahrzeugbauteil 11 mit einer Abdeckung 1 zum Befestigen eines akustischen Sensors 20 gemäß einer ersten Ausführungsform der Erfindung. Das Fahrzeugbauteil 11 umfasst die Abdeckung 1 und eine Fahrzeugkomponente 12.

Die Fahrzeugkomponente 12 ist Teil einer Fahrzeugverkleidung. Die Fahrzeugkomponente 12 ist bevorzugt aus Kunststoff oder einem Fahrzeugblech geformt. In der Fahrzeugkomponente 12 ist eine Durchgangsöffnung angebracht, welche beispielsweise durch Bohren oder Fräsen in die Fahrzeugkomponente 12 eingebracht wurde. Die Durchgangsöffnung verbindet eine außenliegende Seite der Fahrzeugkomponente 12 und eine innenliegende Seite der Fahrzeugkomponente 12. Auf der außenliegenden Seite der Fahrzeugkomponente 12, welche bei einem Einbau der Fahrzeugkomponente 12 in ein zugehöriges Fahrzeug auf Seiten einer Fahrzeugumgebung liegt, weist die Durchgangsöffnung eine Fase auf. Somit verjüngt sich eine Dicke der Fahrzeugkomponente 12 an einem Rand der Durchgangsöffnung.

Die Abdeckung 1 ist in der Durchgangsöffnung der Fahrzeugkomponente 12 angeordnet. Die Abdeckung 1 umfasst einen Deckelbereich 2, einen Halterungsbereich 5 und einen Trägerbereich 9. Die Abdeckung 1 ist in dieser ersten Ausführungsform ein einstückiges Bauelement.

Der Deckelbereich 2 der Abdeckung 1 ist ein im Wesentlichen flächiger Abschnitt der Abdeckung 1, welcher eine erste Seite 2a und eine zweite Seite 2b aufweist, wobei die erste Seite 2a eine der zweiten Seite 2b gegenüberliegende Seite ist. Bei der in Figur 1 gezeigten Anordnung der Abdeckung 1 in der Durchgangsöffnung der Fahrzeugkomponente 12, liegt die erste Seite 2a auf Seiten der Fahrzeugumgebung. Der Deckelbereich 2 weist auf der ersten Seite 2a eine ebene Oberfläche auf. Die ebene Oberfläche ist eine Oberfläche, in der keine Konturen eingebracht sind. Dennoch weist die ebene Oberfläche in dieser ersten Ausführungsform eine raue Struktur auf. Durch diese wird gewährleistet, dass eine eventuell aufzubringende Lackschicht ausreichend an der ebenen Oberfläche haftet.

Der Deckelbereich 2 umfasst einen Membranbereich 3 sowie einen Adaptionsbereich 4. Die ebene Oberfläche des Deckelbereichs 2 umfasst eine Oberfläche des Membranbereichs 3 und eine Oberfläche des Adaptionsbereichs 4. Der Membranbereich 3 und der Adaptionsbereich 4 werden somit jeweils durch einen Abschnitt des im Wesentlichen flächigen Deckelbereichs 2 gebildet. Dabei bildet der Adaptionsbereich 4 einen äußeren Umfang der ebenen Oberfläche des Deckelbereichs 2. Der Adaptionsbereich 4 ist somit ein Randbereich des Deckelbereichs 2. Dabei ist eine Dicke des Adaptionsbereichs 4 an dessen äußeren Umfang geringer als an dessen inneren Umfang. Die Dicke des Adaptionsbereichs 4 nimmt somit zu einem Rand des Deckelbereichs 2 hin ab. Die Dicke des Adaptionsbereichs 4 korrespondierend bevorzugt mit der Fase der Fahrzeugkomponente 12. Die Dicke des Adaptionsbereichs 4 ist ein Abstand zwischen der ersten Seite 2a und der zweiten Seite 2b. Dabei liegt die Oberfläche des Adaptionsbereichs 4, die auf der ebenen Oberfläche des Deckelbereichs 2 liegt, weiterhin in einer Ebene mit den anderen Bereichen der ebenen Oberfläche. Jedoch nähert sich die zweite Seite 2b in dem Adaptionsbereich in einem spitzen Winkel an die erste Seite 2a an. Der Adaptionsbereich 4 weist somit in seinem Querschnitt eine Keilform auf. Der spitze Winkel ist dabei derart gewählt, dass eine auf der zweiten Seite 2b gelegene Oberfläche des Adaptionsbereichs 4 parallel zu einer Oberfläche der Fahrzeugkomponente 12 im Bereich der Fase verläuft. Alternativ dazu ist es vorteilhaft, wenn der spitze Winkel spitzer als der zuvor beschriebene spitze Winkel ist.

Der Membranbereich 3 bildet einen zentralen Bereich der ebenen Oberfläche. Der Membranbereich 3 ist dazu eingerichtet, von einem elektroakustischen Wandler zu einer Schwingung angeregt zu werden, um ein Schallsignal auszusenden oder zu empfangen. Dazu weist der Membranbereich 3 eine auf der zweiten Seite 2b des Deckelbereichs 2 gelegene Oberfläche auf, an der ein elektroakustischer Wandler mit dem Membranbereich 3 in Kontakt gebracht werden kann. Dies ist in dieser ersten Ausführungsform dann der Fall, wenn der akustische Sensor 20 in der Abdeckung 1 fixiert ist.

Damit der Membranbereich 3 besonders einfach zu einer Schwingung angeregt werden kann, umläuft diesen auf der zweiten Seite 2b des Deckelbereichs 2 eine Sicke 6. Die Sicke 6 ist ein Bereich, in dem der Deckelbereich 2 eine verringerte Dicke aufweist. Somit umläuft die Sicke 6 den Membranbereich 2 ähnlich einer auf der zweiten Seite 2b eingebrachten Rinne.

Der Halterungsbereich 5 ist auf der zweiten Seite 2b des Deckelbereichs 2 innerhalb eines inneren Umfangs des Adaptionsbereichs 4 und außerhalb des Membranbereichs 3 angeordnet. Betrachtet man die Abdeckung 1 in dem in Figur 1 gezeigten Querschnitt, so liegt der Halterungsbereich 5 somit zwischen der Sicke 8 und dem Adaptionsbereich 4 und umläuft den Membranbereich 3. Der Halterungsbereiche 5 weist dabei jedoch eine Unterteilung auf, so dass dieser sich aus einzelnen Teilbereichen zusammensetzt, die in einem gleichbleibenden Abstand zueinander auf der zweiten Seite 2b des Deckelbereichs 2 angeordnet sind und in ihrer Anordnung einem Innenradius des Adaptionsbereiches folgen. In Figur 1 sind ein rechter Teilbereiche und ein linker Teilbereich dargestellt, wobei der rechte Teilbereich des Halterungsbereichs 5 und der linke Teilbereich des Halterungsbereichs 5 lediglich über den Deckelbereich 2 miteinander verbunden sind.

Der Halterungsbereich 5 umfasst auf einer der ersten Seite 2a des Deckelbereichs 2 angewandten Seite eine Auflagefläche 6. Die Auflagefläche 6 erstreckt sich in dieser ersten Ausführungsform daher im Wesentlichen parallel zu der zweiten Seite 2b des Deckelbereichs 2 ist von dieser jedoch in einer Stufe abgesetzt. Die Abdeckung 1 liegt mit der Auflagefläche 6 auf der Fahrzeugkomponente 12 auf. Dabei ist der Adaptionsbereich 4 derart geformt, dass dieser an seinem äußeren Umfang die Fahrzeugkomponente 12 berührt, wenn die Auflagefläche 6 auf der Fahrzeugkomponente 12 aufliegt.

Alternativ ist der Adaptionsbereich 4 federelastisch. Dies wird beispielsweise durch eine entsprechende Auswahl eines Materials erreicht, aus welchem der Adaptionsbereich 4 geformt ist. Dabei ist es vorteilhaft, wenn der Halterungsbereich 5 und der Adaptionsbereich 4 derart geformt und zueinander angeordnet sind, dass der Adaptionsbereich 4 in Richtung der ersten Seite 2a gebogen wird, wenn die Auflagefläche 6 auf der Fahrzeugkomponente 12 aufliegt. Durch eine geeignete Gestalt der Fase, des Adaptionsbereichs 4 und der Fahrzeugkomponente 12 wird der Adaptionsbereich 4 zumindest an seinem äußeren Umfang gegen die Fahrzeugkomponente 12 gepresst, da dieser federelastisch ist und in seine ursprüngliche Form zurückdrängt. Damit wird eine mögliche Lücke zwischen der Abdeckung 1 und der Fahrzeugkomponente 12 geschlossen.

Damit die Abdeckung 1 in der Durchgangsöffnung verbleibt, weist der Halterungsbereich 5 ferner einen federelastischen Klemmbereich 7 auf, der dazu eingerichtet ist, die Abdeckung 1 über die Auflagefläche 6 und den Klemmbereich 7 an der Fahrzeugkomponente 12 zu fixieren. Der Klemmbereich 7 ist daher derart geformt, dass dieser einen Anteil aufweist, der eine der Auflagefläche 6 gegenüberstehende Fläche bildet. Die Fahrzeugkomponente 12 wird somit zwischen die Auflagefläche 6 und den Klemmbereich 7 geklemmt, wobei eine klemmende Kraft durch den federelastischen Klemmbereich 7 bereitgestellt wird.

In der in Figur 1 gezeigten Ausführungsform ist ersichtlich, dass sowohl der linke Teilbereich des Halterungsbereichs 5 als auch der rechte Teilbereich des Halterungsbereichs 5 den Klemmbereich 7 aufweist. Dabei ist ein Abstand zwischen dem linken Klemmbereich 7 des rechten Teilbereichs und dem Klemmbereich des linken Teilbereichs an einer von dem Deckelbereich 2 abgewandten Seite des Halterungsbereichs 5 größer als ein Durchmesser der Durchgangsöffnung. Wird die Abdeckung 1 in die Durchgangsöffnung eingebracht, so werden die Teilbereiche des federelastischen Klemmbereichs zusammengedrückt und die Abdeckung 1 gleitet in die Durchgangsöffnung. Ist die Abdeckung 1 vollständig in die Durchgangsöffnung eingeführt, was der Fall ist, wenn die Auflagefläche 6 auf der Fahrzeugkomponente 12 aufliegt, so drängen die Teilbereiche des federelastischen Klemmbereichs 7 in Richtung eines Randes der Durchgangsöffnung und fixieren auf diese Weise die Abdeckung 1 in der Durchgangsöffnung.

Die Abdeckung 1 umfasst ferner einen Trägerbereich 9, der an dem Halterungsbereich 5 angeordnet ist und dazu eingerichtet ist, einen akustischen Sensor zwischen dem Membranbereich 3 und dem Trägerbereich 9 zu fixieren. Der Trägerbereich 9 erstreckt sich auf einem dem Deckelbereich 2 gegenüberliegenden Ende des Halterungsbereichs 5 und ist entsprechend dem Halterungsbereich in die Teilbereiche unterteilt. Der Trägerbereich 9 ist eine Klammer, die sich von dem Halterungsbereich 5 ausgehend in einer Richtung entlang der ebenen Oberfläche zu einem Zentrum der ebenen Oberfläche hin erstreckt. Der Trägerbereich 9 weist einen Anteil auf, welcher dem Membranbereich 3 gegenüber steht. Der Trägerbereich 9 ist zumindest teilweise federelastisch.

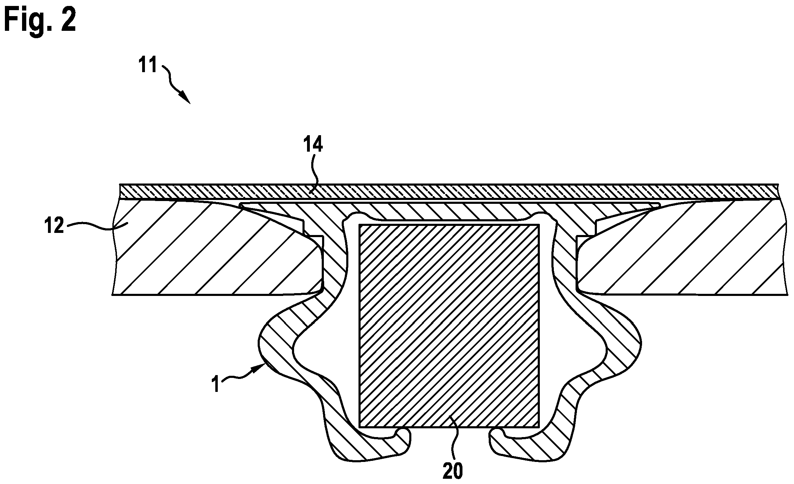

Figur 2 zeigt eine Fixierung eines akustischen Sensors 20 zwischen dem Membranbereich 3 und dem Trägerbereich 9. Es ist ersichtlich, dass die Teilbereiche des federelastischen Trägerbereichs 9 auseinandergedrückt wurden, um den akustischen Sensor 20 zwischen diesen anzuordnen. Da die Teilbereiche des Trägerbereichs 9 federelastisch sind, drängen diese zurück in ihre ursprüngliche, in Figur 1 gezeigte Form, und fixieren somit den akustischen Sensor 20 zwischen sich. Dabei bildet der Membranbereich 3 einen Anschlag für den akustischen Sensor 20.

Der Halterungsbereich 5 weist in dieser ersten Ausführungsform eine S-Form auf, wodurch dieser den akustischen Sensor 20 besonders stark in Richtung des Membranbereichs 3 drückt.

Auf einer auf Seiten des Membranbereichs 3 gelegenen Seite des akustischen Sensors 20 ist ein elektroakustischer Wandler angeordnet. Wird dieser elektroakustische Wandler des akustischen Sensors 20 zu einer Schwingung angeregt, so schwingt auch der Membranbereich 3 mit diesem und es wird eine Schallwelle auf der ersten Seite des Deckelbereichs 2 abgegeben.

In dieser ersten Ausführungsform liegt die ebene Oberfläche des Deckelbereichs 2 in einer gemeinsamen Ebene mit einer Oberfläche 13 der Fahrzeugkomponente 12. Dies wird dadurch erreicht, dass ein Abstand zwischen der ebenen Oberfläche des Deckelbereichs 2 und der Auflagefläche 6 derart gewählt ist, dass die Abdeckung 1 nur soweit in der Fase der Fahrzeugkomponente 12 versinken kann, dass die ebene Oberfläche bündig mit der an die Fase angrenzende Oberfläche 13 der Fahrzeugkomponente 12 liegt.

Wie ebenfalls in Figur 2 gezeigt, weist das Fahrzeugbauteil 11 eine gemeinsame Lackschicht 14 auf, welche sowohl die ebene Oberfläche des Deckelbereichs 2 als auch die angrenzende Oberfläche 13 der Fahrzeugkomponente 12 bedeckt. Dazu wurde die Fahrzeugkomponente 12 und die Abdeckung 1 gemeinsam lackiert, nachdem die Abdeckung 1 in die Durchgangsöffnung eingebracht wurde.

Bei der in Figur 2 gezeigten Befestigung eines akustischen Sensors an einer Fahrzeugkomponente 12 wird eine Schallausbreitung zwischen dem akustischen Sensor und der Fahrzeugkomponente 12 minimiert. Dies wird unter anderem dadurch erreicht, dass durch die Sicke 8 eine akustische Entkopplung der Membran 3 von der Fahrzeugkomponente 12 erreicht wird. Es sei darauf hingewiesen, dass anstelle oder zusätzlich zu der Lackschicht 14 ebenfalls eine Folie auf die Fahrzeugkomponente 12 und die Abdeckung 1 aufgebracht werden kann. Dabei ist es vorteilhaft, wenn die Folie, die Lackschicht 14 oder eine Kombination derer, eine Dicke aufweist, die deutlich dünner ist als eine Dicke des Membranbereichs. So ist beispielsweise eine Lackschicht 14 und eine Folie vorteilhaft, die um einen Faktor 10 dünner ist als der Membranbereich. Insbesondere ist es vorteilhaft, wenn die Folie oder die Lackschicht 14 dünner als 0,1 mm ist.

In der gezeigten Ausführungsform ist die Abdeckung 1 als ein einteiliges Bauelement ausgeführt. In alternativen Ausführungsformen kann die Abdeckung 1 auch aus unterschiedlichen Materialien oder mehreren Komponenten zusammengesetzt sein. So ist es beispielsweise vorteilhaft, wenn der Membranbereich 3 aus einem besonders flexiblen Material geformt ist und der Trägerbereich 9 aus einem weniger flexiblen Material geformt ist.

Nebst oben stehender Offenbarung wird explizit auf die Offenbarung der Figuren 1 und 2 verwiesen.

## Patentansprüche

1. Abdeckung (1) zum Befestigen eines akustischen Sensors an einer Durchgangsöffnung einer Fahrzeugkomponente (12), umfassend:
einen Deckelbereich (2), welcher auf einer ersten Seite (2a) eine ebene Oberfläche aufweist und welcher einen Membranbereich (3) sowie einen Adaptionsbereich (4) umfasst, wobei
• die ebene Oberfläche des Deckelbereichs (2) eine Oberfläche des Membranbereichs (3) und eine Oberfläche des Adaptionsbereichs (4) umfasst,
• der Adaptionsbereich (4) einen Randbereich des Deckelbereichs (2) mit einem äußeren und einem inneren Umfang bildet, und
• der Membranbereich (3) einen zentralen Bereich der ebenen Oberfläche bildet, und
einen Halterungsbereich (5), welcher
• auf einer zweiten Seite (2b) des Deckelbereichs (2) innerhalb des inneren Umfangs des Adaptionsbereichs (4) und außerhalb des Membranbereiches (3) angeordnet ist,
• auf einer der ersten Seite (2a) des Deckelbereichs (2) abgewandten Seite eine Auflagefläche (6) umfasst, und
• einen federelastischen Klemmbereich (7) umfasst, der dazu eingerichtet ist, die Abdeckung (1) über die Auflagefläche (6) und den Klemmbereich (7) an einer Fahrzeugkomponente (12) zu fixieren.

2. Abdeckung gemäß Anspruch 1, **dadurch gekennzeichnet, dass** der Adaptionsbereich (4) federelastisch ist.

3. Abdeckung gemäß einem der vorhergehenden Ansprüche, **dadurch gekennzeichnet, dass** der Membranbereich (3) dazu eingerichtet ist, von einem elektroakustischen Wandler zu einer Schwingung angeregt zu werden, um ein Schallsignal auszusenden oder zu empfangen.

4. Abdeckung gemäß einem der vorhergehenden Ansprüche, **dadurch gekennzeichnet, dass** auf der zweiten Seite des Deckelbereichs (2) eine Sicke (8) den Membranbereich (2) umläuft.

5. Abdeckung gemäß einem der vorhergehenden Ansprüche, **dadurch gekennzeichnet, dass** eine Dicke des Adaptionsbereichs (4) an seinem äußeren Umfang geringer wird, wobei die Dicke des Adaptionsbereichs (4) ein Abstand zwischen der ersten Seite (2a) und der zweiten Seite (2b) des Deckelbereichs (2) ist.

6. Abdeckung gemäß einem der vorhergehenden Ansprüche, **dadurch gekennzeichnet, dass** die Abdeckung (1) einen Trägerbereich (9) umfasst, der an dem Halterungsbereich (5) angeordnet ist und dazu eingerichtet ist, einen akustischen Sensor zwischen dem Membranbereich (3) und dem Trägerbereich (9) zu fixieren.

7. Abdeckung gemäß einem der vorhergehenden Ansprüche, **dadurch gekennzeichnet, dass** der Trägerbereich (9) zumindest teilweise federelastisch ist.

8. Fahrzeugbauteil (11), umfassend eine Abdeckung (1) gemäß einem der vorhergehenden Ansprüche und die Fahrzeugkomponente (12), **dadurch gekennzeichnet, dass** die Abdeckung (1) in einer Durchgangsöffnung der Fahrzeugkomponente (12) angeordnet ist, wobei die Abdeckung (1) über die Auflagefläche (6) und den Klemmbereich (7) an die Fahrzeugkomponente (12) geklemmt ist.

9. Fahrzeugbauteil (11) gemäß Anspruch 8, **dadurch gekennzeichnet, dass** die ebene Oberfläche des Deckelbereichs (2) in einer gemeinsamen Ebene mit einer Oberfläche (13) der Fahrzeugkomponente (12) liegt.

10. Fahrzeugbauteil (11) gemäß einem der Ansprüche 8 oder 9, **dadurch gekennzeichnet, dass** eine gemeinsame Lackschicht (14) sowohl die ebene Oberfläche des Deckelbereichs (2) als auch eine angrenzende Oberfläche (13) der Fahrzeugkomponente (12) bedeckt.

## Claims

1. Covering (1) for fastening an acoustic sensor at a passage opening of a vehicle component (12), comprising:
a cover region (2) which has a flat surface on a first side (2a) and which comprises a membrane region (3) and also an adaptation region (4), wherein
• the flat surface of the cover region (2) comprises a surface of the membrane region (3) and a surface of the adaptation region (4),
• the adaptation region (4) forms an edge region of the cover region (2) with an outer and an inner periphery, and
• the membrane region (3) forms a central region of the flat surface, and
a holding region (5) which
• is arranged on a second side (2b) of the cover region (2) within the inner periphery of the adaptation region (4) and outside the membrane region (3),
• comprises a support area (6) on a side which is averted from the first side (2a) of the cover region (2), and
• comprises a spring-elastic clamping region (7) which is designed to fix the cover (1) to a vehicle component (12) by means of the support area (6) and the clamping region (7).

2. Covering according to Claim 1, **characterized in that** the adaptation region (4) is spring-elastic.

3. Covering according to either of the preceding claims, **characterized in that** the membrane region (3) is designed to be made to vibrate by an electroacoustic transducer in order to emit or to receive an acoustic signal.

4. Covering according to one of the preceding claims, **characterized in that** a bead (8) encircles the membrane region (2) on the second side of the cover region (2).

5. Covering according to one of the preceding claims, **characterized in that** a thickness of the adaptation region (4) becomes smaller at its outer periphery, wherein the thickness of the adaptation region (4) is a distance between the first side (2a) and the second side (2b) of the cover region (2).

6. Covering according to one of the preceding claims, **characterized in that** the covering (1) comprises a carrier region (9) which is arranged on the holding region (5) and is designed to fix an acoustic sensor between the membrane region (3) and the carrier region (9) .

7. Covering according to one of the preceding claims, **characterized in that** the carrier region (9) is at least partially spring-elastic.

8. Vehicle structural part (11), comprising a covering (1) according to one of the preceding claims and the vehicle component (12), **characterized in that** the covering (1) is arranged in a passage opening of the vehicle component (12), wherein the covering (1) is clamped to the vehicle component (12) by means of the support area (6) and the clamping region (7).

9. Vehicle structural part (11) according to Claim 8, **characterized in that** the flat surface of the cover region (2) lies in a common plane with a surface (13) of the vehicle component (12).

10. Vehicle structural part (11) according to either of Claims 8 and 9, **characterized in that** a common coating layer (14) covers both the flat surface of the cover region (2) and also an adjoining surface (13) of the vehicle component (12).

## Revendications

1. Couvercle (1) pour la fixation d'un capteur acoustique dans une ouverture de passage d'un composant de véhicule (12), comprenant:
une région de couvercle (2), qui présente une surface plane sur un premier côté (2a) et qui comprend une zone de membrane (3) ainsi qu'une zone d'adaptation (4), dans lequel
• la surface plane de la région de couvercle (2) comprend une surface de la zone de membrane (3) et une surface de la zone d'adaptation (4),
• la zone d'adaptation (4) forme une zone de bord de la région de couvercle (2) avec un pourtour extérieur et un pourtour intérieur, et
• la zone de membrane (3) forme une zone centrale de la surface plane, et
une région de support (5), qui
• est disposée sur un deuxième côté (2b) de la région de couvercle (2) à l'intérieur du pourtour intérieur de la zone d'adaptation (4) et à l'extérieur de la zone de membrane (3),
• comprend une face d'appui (6) sur un côté détourné du premier côté (2a) de la région de couvercle (2), et
• comprend une zone de serrage élastique (7), qui est conçue pour fixer le couvercle (1) par la face d'appui (6) et la zone de serrage (7) sur un composant de véhicule (12).

2. Couvercle selon la revendication 1, **caractérisé en ce que** la zone d'adaptation (4) est élastique.

3. Couvercle selon l'une quelconque des revendications précédentes, **caractérisé en ce que** la zone de membrane (3) est conçue pour être mise en vibration par un transducteur électroacoustique, afin d'émettre ou de recevoir un signal sonore.

4. Couvercle selon l'une quelconque des revendications précédentes, **caractérisé en ce qu'**une moulure (8) entoure la zone de membrane (2) sur le deuxième côté de la région de couvercle (2).

5. Couvercle selon l'une quelconque des revendications précédentes, **caractérisé en ce qu'**une épaisseur de la zone d'adaptation (4) diminue à son pourtour extérieur, dans lequel l'épaisseur de la zone d'adaptation (4) est une distance entre le premier côté (2a) et le deuxième côté (2b) de la région de couvercle (2).

6. Couvercle selon l'une quelconque des revendications précédentes, **caractérisé en ce que** le couvercle (1) présente une région portante (9), qui est disposée dans la région de support (5) et qui est conçue pour fixer un capteur acoustique entre la zone de membrane (3) et la région portante (9).

7. Couvercle selon l'une quelconque des revendications précédentes, **caractérisé en ce que** la région portante (9) est au moins en partie élastique.

8. Composant de véhicule (11), comprenant un couvercle (1) selon l'une quelconque des revendications précédentes et le composant de véhicule (12), **caractérisé en ce que** le couvercle (1) est disposé dans une ouverture de passage du composant de véhicule (12), dans lequel le couvercle (1) est serré sur le composant de véhicule (12) par la face d'appui (6) et la région de serrage (7).

9. Composant de véhicule (11) selon la revendication 8, **caractérisé en ce que** la surface plane de la région de couvercle (2) est située dans un plan commun avec unbe surface (13) du composant de véhicule (12).

10. Composant de véhicule (11) selon une des revendications 8 ou 9, **caractérisé en ce qu'**une couche de peinture commune (14) recouvre aussi bien la surface plane de la région de couvercle (2) qu'une surface adjacente (13) du composant de véhicule (12).
